# EUROPÄISCHE PATENTANMELDUNG

(11) **EP 4 295 998 A1**
(43) Veröffentlichungstag der Anmeldung: **27.12.2023**
(21) Anmeldenummer: 23180981.5
(22) Anmeldetag: 22.06.2023
(51) Int. Cl.: B23Q 35/28, B27D 5/00

(54) **TASTVORRICHTUNG**

(30) Priorität: 23.06.2022 DE 102022115654
(71) Anmelder: HOMAG Kantentechnik GmbH, 32657 Lemgo (DE)
(72) Erfinder: Brinkmeier, Michael, 32657 Lemgo (DE); Letmathe, Guido, 33818 Lepoldshöhe (DE); Garnjost, Ralf, 32791 Lage Lippe (DE)
(74) Vertreter: Hoffmann Eitle

(57) **Zusammenfassung**

Erfindungsgemäß wird eine Tastvorrichtung bereitgestellt, die umfasst: zumindest ein erstes Tastelement und eine Aufnahme zur Aufnahme des Tastelements, wobei die Aufnahme zumindest einen verstellbaren Bereich zur Positionseinstellung des Tastelements aufweist. Die Aufnahme ist zur Bewegung des verstellbaren Bereichs abschnittsweise elastisch verformbar.

## Beschreibung

### Technisches Gebiet

Die Erfindung betrifft eine Tastvorrichtung, insbesondere für ein Bearbeitungsaggregat, sowie eine Bearbeitungsmaschine.

### Stand der Technik

Auf Grund von Materialtoleranzen in Bezug auf die Materialdicke oder Werkstückeigenschaften werden bei der Zerspanung von plattenförmigen Werkstücken Tastvorrichtungen eingesetzt, die eine definierte Position des Werkzeugs zur Oberfläche des Werkstücks bereitstellen. Insbesondere bei der Bearbeitung von Werkstücken mit unterbrochenen Oberflächen wie Nuten, Bohrungen oder ähnlichen Aus- bzw. Durchbrüchen werden Tastvorrichtungen benötigt, die diese Ausbrüche überdecken können und eine Führung des Werkzeuges zu ermöglichen. In diesem Zusammenhang sind Tastschuhe oder Mehrfachrollensysteme bekannt.

Alle bisher bekannten Lösungen haben jedoch den Nachteil, dass die Tastvorrichtungen aus relativ vielen Bauteilen bestehen, die gefertigt, montiert und zueinander eingestellt werden müssen. Es ist beispielsweise eine Tastvorrichtung bekannt, die ein zentrales Tastelement und zusätzliche Tastelemente aufweist, die relativ zum zentralen Tastelement eingestellt werden müssen, um ein undefiniertes Eintauchen des Werkzeugs in die zu zerspanenden Materialen zu verhindern. Diese Einstellung wird meist so gestaltet, dass die zusätzlichen Tastelemente durch Klemmen von positionierbaren, exzentrischen Wellen, die mittels zwei Werkzeugen verändert oder fixiert werden, eingestellt werden. Eine andere vorherrschende Ausführungsform ist die Verstellung über Spindelsysteme, die auf eine linear ausgeprägte Führungsebene wirkt.

Darüber hinaus sind die bekannten Lösungen auf Grund ihrer parallel wirkenden Bedien- und Verstellpositionen sehr schlecht zugänglich und ermöglichen keine befriedigenden reproduzierbaren Einstellungen. Auch müssen Spindelsysteme durch zusätzliche Bauteile wie Federn und Klemmungen spielfrei ausgestaltet werden. Somit sind die bekannten Systeme relativ komplex aufgebaut.

### Darstellung der Erfindung

Der Erfindung liegt die Aufgabe zugrunde, eine Tastvorrichtung bereitzustellen, die eine präzise Einstellmöglichkeit bietet und kostengünstig ausgeführt ist.

Anspruch 1 stellt eine entsprechende Tastvorrichtung bereit. Weitere bevorzugte Ausführungsformen sind in den abhängigen Ansprüchen aufgeführt sowie nachfolgend beschrieben.

Erfindungsgemäß wird eine Tastvorrichtung bereitgestellt, die aufweist: zumindest ein erstes Tastelement und eine Aufnahme zur Aufnahme des Tastelements, wobei die Aufnahme zumindest einen verstellbaren Bereich zur Positionseinstellung des Tastelements aufweist. Die Aufnahme ist dabei zur Bewegung des verstellbaren Bereichs abschnittsweise elastisch verformbar.

Auf Grund der Reduzierung der zur Ausbildung der Tastvorrichtung verwendeten Komponenten können die Fertigungs- und Montagezeiten signifikant verkürzt werden. Auch lässt sich die Tastvorrichtung einfacher, und damit kostengünstiger, herstellen. Eine Positionseinstellung des Tastelements ist darüber hinaus äußerst präzise.

Die Lösung mit einer zumindest in Teilbereichen verformbaren Aufnahme erfordert kein weiteres Ausrichten des ersten Tastelements relativ zu anderen Komponenten, wie beispielsweise anderen Tastelementen, der Tastvorrichtung. Wird die Tastvorrichtung in einer Maschine oder einem Aggregat montiert, so wird sofort eine Lageabweichung aus dem Umfeld ersichtlich, welche mit der Aufnahme der Tastvorrichtung kompensiert werden kann.

Obwohl bevorzugt ist, dass das erste Tastelement als eine Tastrolle ausgebildet ist, kann das erste Tastelemente auch ein Tastschuh sein.

Gemäß einer weiteren Ausführungsform umfasst die Tastvorrichtung ein zweites Tastelement, das an einem starren Bereich der Aufnahme angeordnet ist. Somit ist das zweite Tastelement relativ zur Aufnahme nicht bewegbar und kann als Referenz dienen.

Gemäß einer Ausführungsform umfasst die Tastvorrichtung ein weiteres erstes Tastelement, wobei das weitere erste Tastelement an einem weiteren verstellbaren Bereich angeordnet ist. Die Tastvorrichtung gemäß dieser Ausführungsform weist demnach zwei verstellbare Tastelemente auf, um eine jeweilige Positionseinstellung vorzunehmen.

Besonders bevorzugt befindet sich das zweite Tastelement zwischen den ersten Tastelementen. Damit können die benachbart zum zweiten Tastelement befindlichen ersten Tastelemente verstellt werden, wohingegen das zweite Tastelement als Referenz dient.

Bevorzugt ist die Tastvorrichtung als Mehrfach-Rollentastung ausgebildet, bei der die Tastelemente jeweils als Tastrolle ausgeführt sind.

Die Aufnahme kann eine Aussparung zwischen dem verstellbaren Bereich und einem Basisbereich der Aufnahme aufweisen. Entsprechend kann eine Aussparung zwischen dem weiteren verstellbaren Bereich und dem Basisbereich der Aufnahme ausgebildet sein. Somit kann der verstellbare Bereich und gegebenenfalls der weitere verstellbare Bereich schenkelförmig ausgebildet sein und am Fuß des Schenkels die elastische Verformung ermöglichen. Die Aussparung kann mittels eines Lasers in die Aufnahme eingebracht werden.

Insbesondere ist es bevorzugt, den Verbindungsbereich zwischen dem verstellbaren Bereich (und gegebenenfalls dem weiteren verstellbaren Bereich) verjüngt auszubilden, um diesen in bevorzugter Weise abschnittsweise elastisch verformbar bereitzustellen.

Zusätzlich kann ein Endabschnitt der Aussparung eine gerundete Kontur aufweisen, um die Beweglichkeit des verstellbaren Bereichs zu verbessern. Entsprechendes gilt, sofern vorhanden, für den weiteren verstellbaren Bereich.

Dabei ist es bevorzugt, dass die gerundete Kontur eine zylindrische Kontur ist, die insbesondere gebohrt ist. Auf diese Weise kann eine definierte elastische Verstellung des verstellbaren Bereichs gewährleistet werden, insbesondere wenn die Aussparung mittels eines Lasers hergestellt wurde.

Es ist ferner bevorzugt, dass eine Breite oder ein Durchmesser der gerundeten Kontur größer ist als eine Breite der Aussparung, um die Beweglichkeit des verstellbaren Bereichs und/oder des weiteren verstellbaren Bereichs und damit die Positionseinstellung des ersten Tastelements (und/oder des weiteren ersten Tastelements) zu begünstigen.

Die Aufnahme kann eine, insbesondere gerundete, Kerbung im Übergangsbereich zum verstellbaren Bereich aufweisen, um die Beweglichkeit des verstellbaren Bereichs (oder die Verformbarkeit in diesem Bereich) zu verbessern. Entsprechendes gilt, wenn vorhanden, für eine, insbesondere gerundete, Kerbung im Übergangsbereich zum weiteren verstellbaren Bereich.

Zur präzisen Bewegung des verstellbaren Bereichs kann die Tastvorrichtung eine Stelleinrichtung zur Bewegung des verstellbaren Bereichs aufweisen, um eine Positionseinstellung des Tastelements vorzunehmen. Auch kann, wenn vorhanden, eine Stelleinrichtung zur Bewegung des Weiteren verstellbaren Bereichs vorgesehen sein. Insbesondere kann eine spielfreie Verstellung der Stelleinrichtung bereitgestellt werden.

Die Stelleinrichtung kann manuell betätigbar oder angetrieben ausgeführt sein. Beispiele einer manuell betätigbaren Stelleinrichtung sind eine Stellspindel, eine Stelleinrichtung mit Einstellmuttern, Zug-Druck-Schrauben-Kombination oder dergleichen. Ist die Stelleinrichtung angetrieben ausgeführt, so kann es sich beispielsweise um einen ein Schrittmotor, einen hydraulischen Antrieb oder einen piezoelektrischer Antrieb handeln.

Eine Achse der Stelleinrichtung (oder der Stelleinrichtungen) kann so verlaufen, dass die Achse das erste Tastelement nicht schneidet. Mit anderen Worten ist die Achse der Stelleinrichtung derart geneigt, dass diese bei insbesondere einer manuellen Betätigung der Stelleinrichtung zugänglich ist. Sind zwei Stelleinrichtungen vorgesehen (eine Stelleinrichtung zur Bewegung des verstellbaren Bereichs und eine Stelleinrichtung zur Bewegung des Weiteren verstellbaren Bereichs) können deren Achsen v-förmig verlaufen.

Ferner ist bevorzugt, dass die Aufnahme einstückig ausgebildet ist. Somit kann die Anzahl der Komponenten der Tastvorrichtung deutlich reduziert werden. Die Aufnahme kann beispielsweise als Laserzuschnitt aus einem Vollmaterial gefertigt sein. Ein weiterer Vorteil besteht im schwingungsärmeren Auflaufverhalten auf das Werkstück durch eine Gewichtsreduzierung der beschleunigten Massen.

Die Aufnahme kann eine Schnittstelle zur Anbringung der Tastvorrichtung an einem Bearbeitungsaggregat aufweisen. Es ist bevorzugt, dass die Schnittstelle Bohrungen aufweist, um die Tastvorrichtung befestigen zu können.

Gemäß einer weiteren Zielrichtung betrifft die Erfindung ein Bearbeitungsaggregat zur Bearbeitung eines Werkstücks, umfassend eine Tastvorrichtung gemäß einem der vorangegangenen Aspekte sowie eine durch die Tastvorrichtung geführte, insbesondere spanend arbeitende, Bearbeitungseinrichtung. Beispielsweise kann es sich um einen Fräser oder ein Ziehklingenaggregat handeln. Auch ist es möglich, eine Inkjet-Druckvorrichtung als Bearbeitungsaggregat einzusetzen.

Das Bearbeitungsaggregat kann eingerichtet sein, ein Werkstück aus zumindest abschnittsweise Holz, Holzwerkstoff, Verbundstoff oder Kunststoff zu bearbeiten oder zu behandeln.

Ferner wird eine Bearbeitungsmaschine bereitgestellt, die ein solches Bearbeitungsaggregat umfasst. Eine solche Bearbeitungsmaschine kann als Stationärmaschine, bei der ein Werkstück während eines Bearbeitungsvorgangs stationär gehalten wird, oder als Durchlaufmaschine ausgebildet sein. Im Fall einer Durchlaufmaschine wird das Werkstück mit einer Fördereinrichtung, beispielsweise einem Förderriemen oder einer Förderkette, bewegt und am Bearbeitungsaggregat vorbeigeführt. In beiden Fällen kommt die Tastvorrichtung im Zuge der Relativbewegung zwischen Bearbeitungsaggregat und Werkstück mit einer Fläche des Werkstücks in Kontakt.

### Kurze Beschreibung der Zeichnungen

Weitere Merkmale und Vorteile der Erfindung ergeben sich aus der nachfolgenden Beschreibung einer Ausführungsform unter Bezugnahme auf die beiliegenden Zeichnungen.

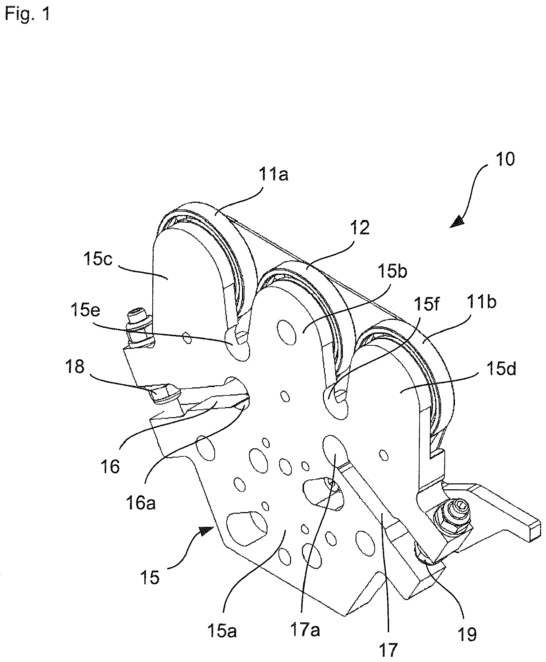

- Fig. 1: ist eine perspektivische Ansicht einer Tastvorrichtung gemäß einer Ausführungsform der Erfindung.

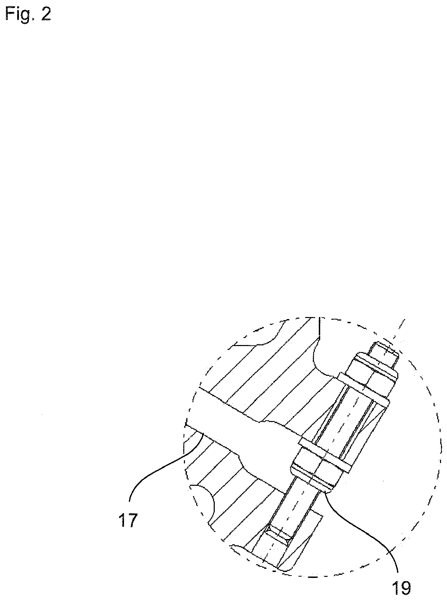

- Fig. 2: zeigt eine Detailansicht der in Fig. 1 dargestellten Tastvorrichtung.

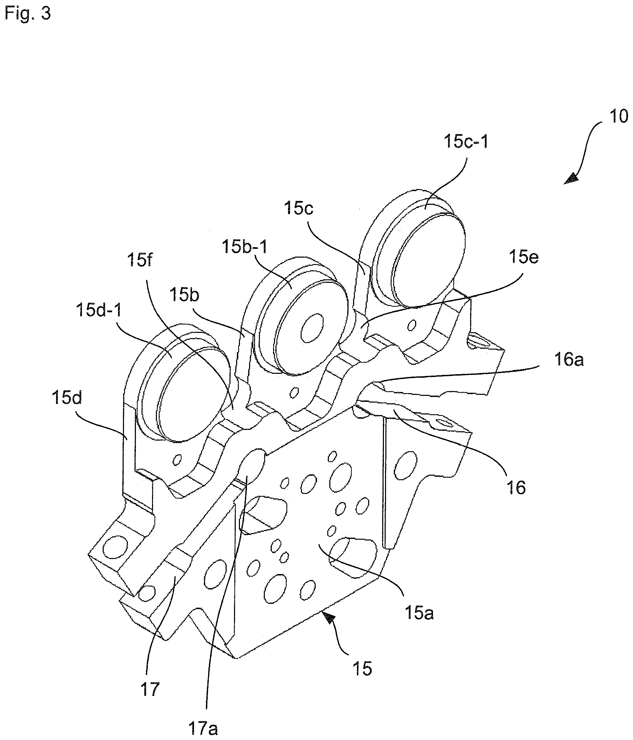

- Fig. 3: ist eine weitere perspektivische Ansicht der Tastvorrichtung gemäß Fig. 1, wobei zur besseren Übersicht einzelne Komponenten der Tastvorrichtung weggelassen wurden.

### Beschreibung der bevorzugten Ausführungsform

Anhand eines anschaulichen Beispiels wird nachfolgend eine Ausführungsform einer Tastvorrichtung 10 gemäß der Erfindung näher erläutert.

Die Tastvorrichtung 10 umfasst ein erstes Tastelement 11a sowie ein weiteres erstes Tastelement 11b, zwischen denen ein zweites Tastelement 12 angeordnet ist. Die Tastvorrichtung 10 ist als Mehrfach-Rollentastung ausgeführt, bei der die Tastelemente 11a, 11b, 12, die von einer Aufnahme 15 aufgenommen werden, als Tastrollen ausgebildet sind und im Betrieb der Tastvorrichtung 10 mit einer Fläche eines Werkstücks in Kontakt gebracht werden können.

Die Tastvorrichtung 10 kommt insbesondere in Kombination mit einem Bearbeitungsaggregat zum Einsatz, welches Bearbeitungsaggregat zur Bearbeitung von Werkstücken aus beispielsweise zumindest abschnittsweise Holz, Holzwerkstoff, Verbundstoff oder Kunststoff eingesetzt werden kann.

Die Aufnahme 15 der Tastvorrichtung 10 umfasst einen Basisbereich 15a, der mit einer Schnittstelle zur Anbringung der Tastvorrichtung 10 an einem Bearbeitungsaggregat (nicht gezeigt) ausgestattet ist. Hierzu weist der Basisbereich 15a mehrere Bohrungen auf. Der Basisabschnitt 15a geht in einen starren Bereich 15b über, an dessen Rückseite eine Anbringung 15b-1 zur Anbringung des zweiten Tastelements 12 vorgesehen ist.

Ferner umfasst die Aufnahme 15 einen verstellbaren Bereich 15c an einer ersten Seite des starren Bereichs 15b sowie einen weiteren verstellbaren Bereich 15d benachbart zu einer zweiten Seite des starrten Bereichs 15b. Am verstellbaren Bereich 15c ist eine Anbringung 15c-1 zur Anbringung des ersten Tastelements 11a und am weiteren verstellbaren Bereich 15d ist eine Anbringung 15d-1 zur Anbringung des Weiteren ersten Tastelements 15b vorgesehen.

Zwischen dem verstellbaren Bereich 15c und dem Basisbereich 15a der Aufnahme 15 ist eine erste Aussparung 16 vorgesehen, an deren Endabschnitt eine gerundete Kontur 16a ausgebildet ist. Die gerundete Kontur 16a weist einen größeren Durchmesser als eine Breite der Aussparung 16 auf.

Der weitere verstellbare Bereich 15d sowie der Basisbereich 15a werden durch eine zweite Aussparung 17 voneinander getrennt, die ähnlich wie bei der zuvor genannten Aussparung 16 in einem Endabschnitt eine gerundete Kontur 17a aufweist, die ebenfalls einen größeren Durchmesser aufweist, als die Breite der Aussparung 17.

Ferner sind zwischen dem starren Bereich 15b und dem verstellbaren Bereich 15c eine gerundete Kerbung 15e und zwischen dem weiteren verstellbaren Bereich 15d und dem starren Bereich 15b eine gerundete Kerbung 15f vorgesehen.

Durch die Aussparung 16, die gerundete Kontur 16a am Endabschnitt der Aussparung 16 sowie die Kerbung 15e ist der Verbindungsbereich zwischen dem starren Bereich 15b und dem verstellbaren Bereich 15c verjüngt, sodass eine elastische Verformung des Materials im verjüngten Bereich zu einer Stellbewegung des verstellbaren Bereichs 15c begünstigt wird. Entsprechendes gilt für den Verbindungsbereich zwischen dem starren Bereich 15b und dem weiteren verstellbaren Bereich 15d.

Um die Lage des verstellbaren Bereichs 15c zu positionieren oder zu ändern, ist eine Stelleinrichtung 18 vorgesehen, die die Aussparung 18 nahe der Öffnung der Aussparung überbrückt und sowohl mit dem Basisbereich 15a als auch mit dem verstellbaren Bereich 15c verbunden ist. Durch eine Drehbewegung der Stelleinrichtung 18 kann eine elastische Verstellung des verstellbaren Bereichs 15c und damit eine Positionseinstellung des ersten Tastelements 11a initiiert werden.

Entsprechend umfasst die Tastvorrichtung 10 eine zweite Stelleinrichtung 19, welche die Aussparung 17 überbrückt. Durch eine Bewegung der zweiten Stelleinrichtung 19 kann eine Stellbewegung des Weiteren verstellbaren Bereichs 15d relativ zum Basisbereich 15a durchgeführt und damit eine Positionseinstellung des ersten Tastelements 11a erreicht werden.

Die Stelleinrichtungen 18, 19 sind derart angeordnet, dass deren Achsen v-förmig verlaufen. Somit weisen auch die Köpfe der der Stelleinrichtungen 18, 19, die zur Betätigung der Stellbewegung der verstellbaren Bereiche 15c, 15d zu drehen sind, von den Tastelementen 11a, 11b weg und zu deren Betätigung zugänglich. Durch die seitliche Anordnung des Bedienbereichs und damit der Zugänglichkeit der Stelleinrichtungen 18, 19 ist eine ergonomisch vorteilhafte Bedienung möglich.

Die Stelleinrichtungen können manuell bestätigt oder angetrieben sein.

Manuell betätigbare Stelleinrichtungen können ausgebildet sein als Stellspindel, Stelleinrichtung mit Einstellmuttern (im Ausführungsbeispiel dargestellt), Zug-Druck-Schrauben-Kombination oder dergleichen. Im Fall einer Stellspindel können die Freiheitsgrade in der Spindelverstellung der Stellspindel durch die Verformungskräfte der Materialspannung aufgehoben werden.

Beispiele angetriebener Stelleinrichtungen sind ein Schrittmotor, ein hydraulischer Antrieb oder ein piezoelektrischer Antrieb.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Tastvorrichtung (10), umfassend:
zumindest ein erstes Tastelement (11a, 11b),
eine Aufnahme (15) zur Aufnahme des Tastelements (11a, 11b),
wobei die Aufnahme (15) zumindest einen verstellbaren Bereich (15c, 15d) zur Positionseinstellung des Tastelements (11a, 11b) aufweist,
**dadurch gekennzeichnet, dass** die Aufnahme (15) zur Bewegung des verstellbaren Bereichs (15c, 15d) abschnittsweise elastisch verformbar ist.

2. Tastvorrichtung (10) gemäß Anspruch 1, wobei das Tastelement (11a, 11b) eine Tastrolle oder ein Tastschuh ist.

3. Tastvorrichtung (10) gemäß einem der vorangegangenen Ansprüche, ferner umfassend ein zweites Tastelement (12), das an einem starren Bereich (15b) der Aufnahme (15) angeordnet ist.

4. Tastvorrichtung (10) gemäß einem der vorangegangenen Ansprüche, ferner umfassend ein weiteres erstes Tastelement (11a, 11b), wobei das weitere erste Tastelement (11a, 11b) in einem weiteren verstellbaren Bereich (15c, 15d) angeordnet ist.

5. Tastvorrichtung (10) gemäß einem der vorangegangenen Ansprüche, wobei die Aufnahme (15) eine Aussparung (16, 17) zwischen dem verstellbaren Bereich (15c, 15d) und einem Basisbereich (15a) der Aufnahme (15) aufweist.

6. Tastvorrichtung (10) gemäß Anspruch 5, wobei ein Endabschnitt der Aussparung (16, 17) eine gerundete Kontur (16a, 17a) aufweist,
wobei bevorzugt ist, dass eine Breite oder ein Durchmesser der gerundeten Kontur (16a, 17a) größer ist als eine Breite der Aussparung (16, 17).

7. Tastvorrichtung (10) gemäß Anspruch 6, wobei die gerundete Kontur (16a, 17a) eine zylindrische Kontur ist.

8. Tastvorrichtung (10) gemäß einem der vorangegangenen Ansprüche, ferner umfassend eine Kerbung (15e, 15f) im Übergangsbereich zum verstellbaren Bereich (15c, 15d).

9. Tastvorrichtung (10) gemäß einem der vorangegangenen Ansprüche, ferner umfassend eine Stelleinrichtung (18, 19) zur Bewegung des verstellbaren Bereichs (15c, 15d).

10. Tastvorrichtung (10) gemäß Anspruch 9, wobei eine Achse der Stelleinrichtung (18, 19) das erste Tastelement nicht schneidet.

11. Tastvorrichtung (10) gemäß einem der Ansprüche 9-10, wobei die Stelleinrichtung manuell betätigbar oder angetrieben ausgeführt ist.

12. Tastvorrichtung (10) gemäß einem der vorangegangenen Ansprüche, wobei die Aufnahme (15) eine Schnittstelle zur Anbringung der Tastvorrichtung (10) an einem Bearbeitungsaggregat aufweist.

13. Tastvorrichtung (10) gemäß einem der vorangegangenen Ansprüche, wobei die Aufnahme (15) einstückig ausgebildet ist.

14. Bearbeitungsaggregat zur Bearbeitung eines Werkstücks, umfassend eine Tastvorrichtung (10) gemäß einem der vorangegangenen Ansprüche sowie eine durch die Tastvorrichtung (10) geführte, insbesondere spanend arbeitende, Bearbeitungseinrichtung.

15. Bearbeitungsmaschine, umfassend ein Bearbeitungsaggregat gemäß Anspruch 14.
